# EUROPEAN PATENT APPLICATION

(11) **EP 4 533 946 A1**
(43) Date of publication of application: **09.04.2025**
(21) Application number: 24204421.2
(22) Date of filing: 03.10.2024
(51) Int. Cl.: A01N 25/02, A01N 63/20, A01P 1/00, A23B 4/22, A23L 17/00, A01N 37/02

(54) **LIQUID ANTIMICROBIAL COMPOSITION**

(30) Priority: 03.10.2023 EP 23201389; 06.03.2024 EP 24161688
(71) Applicant: Purac Biochem B.V., 4206 AC Gorinchem (NL)
(72) Inventor: Iancu, Catalin, 4206 AC, Gorinchem (NL); van Rijswijk, Daniel, Gorinchem, 4206 AC (NL)
(74) Representative: Nederlandsch Octrooibureau

(57) **Abstract**

The invention relates to liquid antimicrobial composition comprising:
• bacteriocin in a concentration of 2-50 ppm;
• acetate in a concentration of 0.4-4 mol/L;
• alkali metal cation in a concentration of at least 0.7 mol per mol of acetate; and
• at least 70 wt.% of water;
wherein the antimicrobial composition has a pH in the range of 4.5-7.5.

The antimicrobial composition that is particularly suitable for reducing the bacterial load of *Listeria* on pieces of raw meat.

The invention also relates to method of treating pieces of animal meat, said method comprising applying the antimicrobial composition of the present invention onto the surface of the pieces of animal meat.

## Description

### TECHNICAL FIELD OF THE INVENTION

The present invention relates to a liquid aqueous antimicrobial composition comprising a combination of bacteriocin and acetate. The antimicrobial composition can suitably be used to reduce the bacterial load of *Listeria monocytogenes* on pieces of raw meat.

The invention also relates to a method of treating pieces of animal meat, said method comprising applying the antimicrobial composition of the present invention onto the surface of the pieces of animal meat.

The invention further relates to the use of the antimicrobial composition of the present invention for reducing the bacterial load of *Listeria* on pieces of meat

### BACKGROUND OF THE INVENTION

Listeriosis is a bacterial infection most commonly caused by *Listeria monocytogenes.* Listeriosis can cause severe illness, including severe sepsis, meningitis, or encephalitis, sometimes resulting in lifelong harm and even death. Those at risk of severe illness are the elderly, foetuses, newborns and those who are immunocompromised. In pregnant women it may cause stillbirth or spontaneous abortion, and preterm birth is common. Listeriosis may cause mild, self-limiting gastroenteritis and fever in anyone.

*Listeria monocytogenes* is ubiquitous in the environment. The main route of acquisition of Listeria is through the ingestion of contaminated food products. Listeria has been isolated from raw meat, dairy products, vegetables, fruit and seafood.

The main means of prevention is through the promotion of safe handling, cooking and consumption of food. Another method of controlling the presence of the Listeriosis causing pathogen *L. monocytogenes* is by spraying foods with an antimicrobial composition.

Lachmann et al. (Invasive listeriosis outbreaks and salmon products: a genomic, epidemiological study, Emerging Microbes & Infections (2022, (11), 1305-1315) carried out an investigation to identify and analyse listeriosis outbreaks in Germany with smoked and graved salmon products as the most likely source of infection. The authors identified 22 independent listeriosis outbreaks occurring between 2010 and 2021 that were most likely associated with the consumption of smoked and graved salmon products.

Schlyter et al. (The effects of diacetate with nitrite, lactate, or pediocin on the viability of Listeria monocytegenes in turkey slurries, Int. J. of Food Microbiol., (1993), 19(4), 271-281) describe the antilisterial effects of sodium diacetate (0.1, 0.3 and 0.5%) alone or in combination with sodium nitrite (30 ppm), sodium lactate (2.5%) or pediocin (5000 arbitrary units/ml) in slurries (25% meat in sterile deionized H₂O) prepared from vacuum-packaged, ready-to-eat turkey breast meat and challenged with *Listeria monocytogenes.*

WO 2013/155624 describes an antimicrobial composition comprising pediocin and at least two organic acids selected from lactic acid, acetic acid, benzoic acid and citric acid.

US 2016/0302456 describes an antimicrobial composition to control the outgrowth of pathogens and spoilage microorganisms in food or beverage products, wherein, the composition comprises an organic acid or its salt and fermentation derived antimicrobial peptide.

US2015/0342197 describes a composition comprising a bacteriophage endolysin and a compound selected from the group consisting of pediocin, nisin, levulinic acid, propionic acid, acetic acid, lauric arginate, a lactoperoxidase system, a phage, a sophorolipid and combinations thereof. Example 1 describes a stock solution containing 0.1 mg/ml pediocin (100 ppm) in 0.1 M sodium acetate pH 5.0.

JP3040282B2 describes a preservative for food comprising a bacteriocin (pediocin) and one or more selected from the group consisting of organic acids (salts), fatty acid esters of polyhydric alcohols, amino acids, peptides and proteins having antimicrobial activities, polysaccharides composed of saccharide, saccharic acids and amino sugars, their partial decomposition products, spices, its purified oil, plant components and alcohols. The examples of D2 describe a preservative composition containing 0.1% pediocin (1,000 ppm) and 0.5 wt.% sodium acetate (0.061 mol/L), with a calculated pH of 8.8.

### SUMMARY OF THE INVENTION

The inventors have developed a liquid aqueous antimicrobial composition that is particularly suitable for reducing the bacterial load of *Listeria* on pieces of raw meat. The liquid antimicrobial composition of the present invention comprises:
- pediocin in a concentration of 2-50 ppm;
- acetate in a concentration of 0.4-4 mol/L;
- alkali metal cation in a concentration of at least 0.7 mol per mol of acetate; and
- at least 70 wt.% of water;
wherein the antimicrobial composition has a pH in the range of 4.5-7.5.

The bacterial load of *Listeria* on pieces of meat can be reduced effectively by applying the liquid antimicrobial composition of the present invention onto the surface of these pieces of meat, e.g. by immersing these pieces in the antimicrobial composition. A substantial reduction in the bacterial load of *Listeria* can thus be achieved well within 10 minutes. Once the antimicrobial composition has exerted its bacteriocidal effect, it can be removed from the surface of the pieces of meat, e.g. by rinsing. This antimicrobial treatment of pieces meat offers the advantage that it does not adversely affect the taste or appearance of the treated pieces of meat.

The inventors have found that the bacteriocidal activity of the antimicrobial composition of the present invention is largely retained even after the antimicrobial composition has been used multiple times to treat pieces of meat.

Another aspect of the invention relates to a method of treating pieces of animal meat, said method comprising applying the antimicrobial composition of the present invention onto the surface of the pieces of animal meat.

Yet another aspect of the invention relates to the use of the antimicrobial composition of the present invention for reducing the bacterial load of *Listeria* on pieces of meat

### DETAILED DESCRIPTION OF THE INVENTION

A first aspect of the invention relates to a liquid antimicrobial composition comprising:
- bacteriocin in a concentration of 2-50 ppm;
- acetate in a concentration of 0.4-4 mol/L;
- alkali metal cation in a concentration of at least 0.7 mol per mol of acetate; and
- at least 70 wt.% of water;
wherein the antimicrobial composition has a pH in the range of 4.5-7.5.

The term "or" as used herein should be construed as "and/or", unless specified otherwise.

The term "a" or "an" as used herein is defined as "at least one" unless specified otherwise.

Numerical ranges expressed in the format "from x to y" are understood to include x and y.

Whenever components A and B are said to be present in a weight ratio of x:y, what is meant is that the concentration of component A in wt.% divided by the concentration of component B in wt.% equals x:y.

Ratios mentioned herein are based on weight/weight, unless indicated otherwise. Similarly, all percentages are percentages by weight (w/w) unless otherwise indicated.

When multiple preferred ranges are described in the format "from x to y" for a specific feature, it should be understood that all ranges combining the different endpoints are also contemplated.

If, for a particular component, a range of 0% to y% or less than y% is recited, said ingredient may be absent.

The term "bacteriocin" as used herein refers to bacterial peptides or proteins that display antimicrobial activity against *Listeria monocytogenes.*

The term "acetate" as used herein encompasses both dissociated and non-dissociated acetic acid.

Whenever reference is made herein to reduction of the bacterial load of *Listeria* on pieces of meat, what is meant is that the at least a fraction of the live *Listeria* bacteria that is present on the surface of the pieces of meat is killed.

The bacteriocin that is employed in accordance with the present invention preferably is a class Ila bacteriocin.

Examples of bacteriocins that may suitably be employed in accordance with the invention include pediocin, acidicin, mesentericin and listeriocin. Preferably, the bacteriocin employed is pediocin. According to a particularly preferred embodiment, the pediocin is selected from SM-1, SA-1 and PA-1.

The antimicrobial composition of the present invention preferably contains bacteriocin in a concentration of 4-30 ppm, more preferably of 6-25 ppm and most preferably of 8-20 ppm.

The antimicrobial composition preferably contains acetate in a concentration of 0.6-3 mol/L, more preferably of 0.7-2.5 mol/Land most preferably of 0.8-1.8 mol/L.

Preferably, the antimicrobial composition contains alkali metal cation in a concentration of at least 0.80 mol per mol of acetate, more preferably in a concentration of 0.85-1.5 mol per mol of acetate, more preferably in a concentration of 0.90-1.2 mol per mol of acetate.

The alkali metal cation in the present antimicrobial composition is preferably selected from potassium cation, sodium cation and combinations thereof. Most preferably, the potassium cation constitutes at least 80 wt.% of the alkali metal cation present in the antimicrobial composition. Preferably, the antimicrobial composition contains potassium cation in a concentration of at least 0.6 mol per mol of acetate, more preferably in a concentration of 0.8-1.5 mol per mol of acetate, more preferably in a concentration of 0.9-1.2 mol per mol of acetate.

The antimicrobial composition of the present invention preferably has a pH in the range of 5.0 to 7.0, more preferably in the range of 5.3 to 6.5, more preferably in the range of 5.4 to 6.2.

In a preferred embodiment, the bacteriocin is present in the antimicrobial composition in a concentration of 5-30 mg per mol of acetate, more preferably of 8-20 mg per mol of acetate.

The water content of the antimicrobial composition preferably is at least 80 wt.%, more preferably at 85 wt.%, most preferably at least 88 wt.%.

The combination of acetate and the alkali metal cation preferably constitutes at least 80 wt.%, more preferably at least 90 wt.% and most preferably at least 95 wt.% of the dry matter that is contained in the antimicrobial composition.

Another aspect of the present invention relates to a process of preparing the antimicrobial composition described herein before, said process comprising combining a source of bacteriocin, a source of acetate and water.

The source of bacteriocin preferably contains at least 0.5 wt.% of bacteriocin, more preferably 1-10 wt.% of bacteriocin and most preferably 1.2-8 wt.% of bacteriocin.

The source of bacteriocin preferably is an aqueous liquid.

The source of acetate preferably contains at least 15 wt.% acetic acid equivalent of acetate. More preferably, the source of acetate contains 20-40 wt.%, more preferably 25-35 wt.% acetic acid equivalent of acetate.

The alkali metal content of the source of acetate is preferably in the range of 3-6 mol/kg, more preferably in the range of 3.5-5.5 mol/kg and most preferably in the range of 4.0-5.0 mol/kg.

The source of acetate preferably is an aqueous liquid. More preferably, the source of acetate is a neutralised vinegar.

A further aspect of the invention relates to method of treating pieces of animal meat, said method comprising applying the antimicrobial composition of the present invention onto the surface of the pieces of animal meat.

The present method is particularly suited for treating pieces of fish meat, especially pieces of salmon meat.

In the present method, the antimicrobial composition is preferably applied by immersing the pieces of animal meat in the antimicrobial composition, by spraying the pieces of animal meat with the antimicrobial composition or by brushing the antimicrobial composition onto the pieces of animal meat.

According to a particularly preferred embodiment, the antimicrobial composition is applied onto the complete outer surface of the pieces of meat. Fully immersing the pieces of meat in the antimicrobial composition is an effective way of ensuring that the antimicrobial composition is applied onto the complete outer surface of the pieces of meat.

The pieces of meat that are treated in accordance with the present method typically retain or pick up 1 wt.% to 5 wt.% of the antimicrobial composition, said percentage being calculated by weight of the pieces of animal meat.

The antimicrobial composition that is retained or picked up by the meat pieces preferably provides per gram of piece of meat 10-150 µmol of acetate, more preferably 15-100 µmol of acetate and most preferably 20-60 µmol of acetate.

The antimicrobial composition that is retained or picked up preferably provides per gram of piece of meat 0.04-2.4 ppb of bacteriocin, more preferably 0.08-1.2 ppb of bacteriocin and most preferably 0.1-1 ppb of bacteriocin.

In a preferred embodiment of the present method, the antimicrobial composition is applied onto the surface of the pieces of meat in less than one minute, more preferably in 1-25 seconds, and most preferably in 5-15 seconds.

The present method preferably comprises removal of at least part of the antimicrobial composition from the surface of the pieces of meat by rising, especially rinsing with aqueous liquid, most preferably by rinsing with water.

Once the antimicrobial composition has been applied onto the pieces of animal meat, the antimicrobial composition should be given sufficient time to exert its antimicrobial effect. Preferably, the applied antimicrobial composition is left on the surface of the pieces of animal meat for 0.5 to 60 minutes, more preferably for 1 to 30 minutes and most preferably 2 to 20 minutes before said surface is rinsed with an aqueous liquid.

The antimicrobial composition that is applied onto the surface of the pieces of animal meat preferably has a temperature in the range of -5 to 30 °C, more preferably in the range of -2 to 20 °C and most preferably in the range of 4 to 15 °C.

The present method of treating pieces of meat preferably results in a reduction of the bacterial load of *Listeria* of more than 70%, more preferably of more than 80% and most preferably of more than 85%. Here a reduction of x% means that the bacterial count is reduced by a factor that equals 100/(100-x).

Yet another aspect of the invention relates to the use of the antimicrobial composition of the present invention for reducing the bacterial load of *Listeria* on pieces of meat

The antimicrobial composition is preferably used for treating pieces of fish meat, especially pieces of salmon meat.

The present use preferably comprises application of the antimicrobial composition onto the surface of the pieces of meat.

The present use preferably comprises immersing the pieces of animal meat in the antimicrobial composition; spraying the pieces of animal meat with the antimicrobial composition; and/or brushing the antimicrobial composition onto the pieces of animal meat. In accordance with the present use, the antimicrobial composition is preferably applied onto the complete outer surface of the pieces of meat. Fully immersing the pieces of meat in the antimicrobial composition is an effective way of ensuring that the antimicrobial composition is applied onto the complete outer surface of the pieces of meat.

In accordance with the present use of fully immersing the pieces of meat in the antimicrobial composition, the pieces of meat typically retain or pick up 1 wt.% to 5 wt.% of the antimicrobial composition, said percentages being calculated by weight of the pieces of meat.

The antimicrobial composition that is retained or picked up by the meat pieces preferably provides per gram of piece of meat 10-150 µmol of acetate, more preferably 15-100 µmol mmol of acetate and most preferably 20-60 µmol of acetate.

The antimicrobial composition that is retained or picked up preferably provides per gram of piece of meat 0.04-2.4 ppb of bacteriocin, more preferably 0.08-1.2 ppb of bacteriocin and most preferably 0.1-1 ppb of bacteriocin.

The present use preferably comprises removal of at least part of the antimicrobial composition from the surface of the pieces of meat by rinsing with aqueous liquid, especially water.

In accordance with the present use, the antimicrobial composition is preferably applied onto the surface of the pieces of meat in less than one minute, more preferably in 1-25 seconds, and most preferably in 5-15 seconds.

Rinsing is preferably carried out 0.5 to 60 minutes, more preferably 1 to 30 minutes and most preferably 2 to 20 minutes after the antimicrobial composition has been applied onto the surface of the pieces of meat.

In accordance with a particularly preferred embodiment, the antimicrobial composition of the present invention is used to reduce the bacterial load of *Listeria monocytogenes.*

The use of the antimicrobial composition in accordance with the present invention preferably Achieves a reduction of the bacterial load of *Listeria* of more than 70%, more preferably of more than 80% and most preferably of more than 85%.

The invention is further illustrated by the following non-limiting examples.

### EXAMPLES

### Example 1

Three antimicrobial compositions were prepared on the basis of the recipes that are shown in Table 1.

**Table 1**

| | **Grams per liter** | | |
|---|---|---|---|
| | **A** | **B** | **1** |
| Inneo^{™} 150¹ | 0.5 | | 0.5 |
| Verdad^{®} F42 ² | | 200 | 200 |
| Water | Remainder | Remainder | Remainder |

| | | | |
|---|---|---|---|
| ¹ Ex Innodal (Aqueous liquid containing 2.5 wt.% pediocin) ² Ex Corbion (Neutralised vinegar. Total acidity (as acetic acid): 30.0-32.0 %(w/w); potassium: 16.5-18.5 %(w/w); sodium: max 0.5% (w/w)) | | | |

Raw salmon samples each weighing approximately 10 gm. (skin on) were purposely infected with *L. monocytogenes* in a standardised manner (15 cells per sample). Next, the samples were fully immersed for 12 seconds in dipping baths containing composition A, composition B, composition 1 or water (Reference). Each dipping bath was used to treat 10 raw salmon samples. The temperature of the dipping bath was 3 °C. After 8 minutes of resting time the treated salmon samples were rinsed with cold water for 10 seconds, followed by detection of *L. monocytogenes* using a standard enrichment protocol and plating onto selective agar according to the methodology described at ISO 11290-1:2017. The results are summarised in Table 2.

**Table 2**

| | **Listeria positive samples** |
|---|---|
| Composition A | 30% |
| Composition B | 30% |
| Composition 1 | 5% |
| Reference (water) | 95% |

### Example 2

Antimicrobial composition 1 of Example 1 was used to treat raw salmon samples by immersion. At 0, 4 and 8 hours 10 pieces of raw salmon meat (10 grams) were successively immersed in the antimicrobial composition for each 15 seconds. The antimicrobial activity of the dipping bath was determined immediately before the first sequence of treatments as well as after the second and third sequence of treatments.

The antimicrobial activity was determined as follows:
- Mark Petri dishes on the bottom for each well location and the corresponding sample name;
- Add 0.35% (v/v) of a sensitive *L. monocytogenes* strain overnight culture to molten and cooled down BHI agar.
- Pour 20 ml in each Petri dish using a sterile volumetric pipette and allow the agar to set at room temperature (15-20 mins);
- Bore wells into the agar using a sterile 1 mL pipette tip or a sterile glass Pasteur pipette;
- Add 60 µL of the antimicrobial composition into each corresponding well.
- Incubate the plates at 30 °C for 24 hours;
- Measure the inhibition zones with a digital calliper by putting both sides of the calliper on the inside edge (re-zero regularly) or use an automatic device for inhibition zones measurements.

Antimicrobial activity is expressed as the diameter of the clear inhibition zone which appears on the *L. monocytogenes* agar lawn. The results of the measurements of antimicrobial activity are summarized in Table 3

**Table 3**

| **Antimicrobial composition** | **Antimicrobial activity (zone diameter in mm)** |
|---|---|
| Fresh | 11.9 |
| After 2^{nd} sequence of treatments | 10.8 |
| After 3^{rd} sequence of treatments | 10.7 |

## Claims

1. A liquid antimicrobial composition, comprising:
• pediocin in a concentration of 2-50 ppm;
• acetate in a concentration of 0.4-4 mol/L;
• alkali metal cation in a concentration of at least 0.7 mol per mol of acetate; and
• at least 70 wt.% of water;
wherein the antimicrobial composition has a pH in the range of 4.5-7.5.

2. The antimicrobial composition according to claim 1, wherein the antimicrobial composition contains pediocin in a concentration of 4-30 ppm.

3. The antimicrobial composition according to claim 1 or 2, wherein the alkali metal cation is selected from potassium cation, sodium cation and combinations thereof.

4. The antimicrobial composition according to any one of claims 1-3, wherein the potassium cation constitutes at least 80 wt.% of the alkali metal cation present in the antimicrobial composition.

5. The antimicrobial composition according to any one of claims 1-4, wherein the composition contains potassium cation in a concentration of at least 0.6 mol per mol of acetate.

6. The antimicrobial composition according to any one of claims 1-5, wherein the pediocin is present in the antimicrobial composition in a concentration of 5-30 mg per mol of acetate.

7. The antimicrobial composition according to any one of claims 1-6, wherein the acetate and the alkali metal cation constitute at least 80 wt.% of the dry matter that is contained in the antimicrobial composition.

8. The antimicrobial composition according to any one of claims 1-7, wherein the antimicrobial composition has a pH in the range of 5.0 to 7.0.

9. A method of treating pieces of animal meat, said method comprising applying the antimicrobial composition according to any one of claims 1-8 onto the surface of the pieces of animal meat.

10. The method according to claim 9, wherein the pieces of animal meat are pieces of fish meat.

11. The method according to claim 9 or 10, wherein the antimicrobial composition is applied by immersing the pieces of animal meat in the antimicrobial composition, by spraying the pieces of animal meat with the antimicrobial composition or by brushing the antimicrobial composition onto the pieces of animal meat.

12. Method according to any one of claims 9-11, wherein the applied antimicrobial composition is left on the surface of the pieces of animal meat for 1 to 60 minutes before said surface is rinsed with an aqueous liquid.

13. Use of the antimicrobial composition according to any one of claims 1-8 for reducing the bacterial load of *Listeria* on pieces of meat

14. Use according to claim 13, wherein the pieces of meat are pieces of fish meat.

15. Use according to claim 13 or 14, wherein the use comprises application of the antimicrobial composition onto the surface of the pieces of meat, followed by rinsing of the pieces of meat with aqueous liquid 1-60 minutes after said application.
